(19) Europäisches Patentamt / European Patent Office / Office européen des brevets

(11) **EP 2 263 056 B1**

(12) **EUROPEAN PATENT SPECIFICATION**

(45) Date of publication and mention
of the grant of the patent:
**22.04.2015  Bulletin 2015/17**

(21) Application number: **09719286.8**

(22) Date of filing: **13.03.2009**

(51) Int Cl.:
*F28D 15/02* *(2006.01)*   *F28F 1/12* *(2006.01)*
*F01N 5/02* *(2006.01)*

(86) International application number:
**PCT/IB2009/005057**

(87) International publication number:
**WO 2009/112946 (17.09.2009 Gazette 2009/38)**

(54) **EXHAUST GAS HEAT RECOVERY UNIT AND EXHAUST GAS HEAT RECOVERY METHOD**

ABGASWÄRMERÜCKGEWINNUNGSEINHEIT UND
ABGASWÄRMERÜCKGEWINNUNGSVERFAHREN

UNITE DE RECUPERATION DE LA CHALEUR D'UN GAZ D'ECHAPPEMENT ET PROCEDE DE
RECUPERATION DE LA CHALEUR D'UN GAZ D'ECHAPPEMENT

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority:  **13.03.2008  JP 2008064659**

(43) Date of publication of application:
**22.12.2010  Bulletin 2010/51**

(73) Proprietor: **TOYOTA JIDOSHA KABUSHIKI
KAISHA**
**Toyota-shi, Aichi-ken, 471-8571 (JP)**

(72) Inventors:
• **TOI, Masao**
**Toyota-shi**
**Aichi-ken 471-8571 (JP)**
• **MABUCHI, Tomoki**
**Toyota-shi**
**Aichi-ken 471-8571 (JP)**
• **TOKI, Hiroyuki**
**Toyota-shi**
**Aichi-ken 471-8571 (JP)**
• **YAMANAKA, Yasutoshi**
**Kariya-City**
**Aichi-Pref 448-8661 (JP)**

(74) Representative: **Albutt, Anthony John**
**D Young & Co LLP**
**120 Holborn**
**London EC1N 2DY (GB)**

(56) References cited:
EP-A- 0 661 741      DE-A1-102006 015 379
JP-A- 2006 313 056   JP-A- 2007 024 423
US-A- 6 026 891      US-A1- 2008 047 690

EP 2 263 056 B1

**Description**

**BACKGROUND OF THE INVENTION**

1. Field of the Invention

The invention relates to an exhaust gas heat recovery unit and exhaust gas heat recovery method used for vehicles such as automobiles.

2. Description of the Related Art

There is a related technology in which the heat of exhaust gas discharged from an engine of a vehicle is recovered based on heat pipe principle and the recovered exhaust gas heat is used to promote warming-up of the engine.
For example, Japanese Patent Application Publication No. 04-45393 (JP-A-04-45393) describes a heat exchanger of the loop heat pipe type, which operates on heat pipe principle. This heat exchanger includes a sealed circulation passage that forms a closed loop, an evaporable and condensable working fluid that is hermitically sealed in the circulation passage, an evaporator that is provided in the circulation passage and that evaporates the working fluid using externally transferred heat, and a condenser that is arranged at a position higher than the evaporator provided in the circulation passage and that conducts heat exchange between the working fluid evaporated at the evaporator and an externally supplied heat transfer fluid.
Because an exhaust gas heat recovery unit is mounted in a vehicle, there is a demand for a more compact exhaust gas heat recovery unit. Therefore, for example, Japanese Patent Application Publication No. 2006-313056 (JP-A-2006-313056) describes a technology that is applied when a heat exchanger of the loop heat pipe type is used as an exhaust gas heat recovery unit. According to the technology, multiple heat pipes, each of which has a heater that heats working fluid using the heat of exhaust gas and an evaporator that evaporates the working fluid heated by the heater using the heat of exhaust gas, are arranged in parallel with each other in the horizontal direction. In addition, headers (communication portions) are provided to provide communication among upper end portions of the heat pipes and among lower end portions of the heat pipes. The header on the side of the evaporators of the heat pipes is connected to a condenser so that the evaporated working fluid is used for heat exchange with a warming-up target. The header on the side of the heaters of the heat pipes is connected via a fluid passage to the condenser so that the working fluid condensed through heat exchange with the warming-up target is returned to the heat pipes. Fins that receive the heat of exhaust gas are provided on the outer peripheries of the heat pipes. In each heat pipe, the fin pitch at the heater and the fin pitch at the evaporator are substantially equal to each other.
In the exhaust gas heat recovery unit according to JP-A-2006-313056, the fin pitch is constant throughout the entire outer periphery of each heat pipe, that is, the fin pitch at the heater and the fin pitch at the evaporator are substantially equal to each other. Therefore, the amount of heat that the fins at the heater receive and the amount of heat that the fins at the evaporator receive are substantially equal to each other. In the case where the exhaust gas heat recovery unit is exposed to an ambient temperature of equal to or lower than the freezing temperature, for example, in the case of cold starting of an engine, the amount of heat applied to the heater that stores the working fluid needs to be larger than the amount of heat applied to the evaporator that does not store the working fluid. However, the amount of heat applied to the heater is equal to the amount of heat applied to the evaporator. Therefore, it takes a long time for the heater to heat the working fluid using the heat received from exhaust gas. Accordingly, for example, in the case of cold starting of the engine, it is not possible to heat the working fluid quickly to circulate it smoothly. As a result, it is not possible to efficiently recover the heat with the use of the exhaust gas heat recovery unit.
Another exhaust gas heat recovery unit is disclosed by US 2008/0047690 A.

**SUMMARY OF THE INVENTION**

The invention provides an exhaust gas heat recovery unit and exhaust gas heat recovery method that makes it possible to recover heat efficiently by promptly heating a working fluid at a heater portion in a short time using exhaust gas in the case of cold starting of an engine.
A first aspect of the invention relates to an exhaust gas heat recovery unit including a heat pipe that is provided in an exhaust pipe and that includes a heater portion which heats a working fluid using heat of exhaust gas discharged from an engine and an evaporator portion which evaporates the working fluid, heated by the heater portion, using the heat of the exhaust gas. Fins that receive a predetermined amount of heat of the exhaust gas are provided on the outer periphery of the heat pipe: The pitch of the fins on the outer periphery of the heater portion of the heat pipe is set to a pitch smaller than the pitch of the fins on the outer periphery of the evaporator portion of the heat pipe.
With this structure, the amount of heat that the fins on the heater portion receive is larger than the amount of heat that the fins on the evaporator portion receive. Therefore, in the case where the exhaust gas heat recovery unit is exposed to an ambient temperature of equal to or lower than the freezing temperature of the working fluid, for example, in the case of cold starting of the engine, a sufficient amount of heat of the exhaust gas is applied to the heater portion that stores the working fluid, and the working fluid in the heating portion is promptly heated by the sufficient amount of heat received from the exhaust gas. As a result, it is possible to smoothly circulate the working fluid to efficiently recover the heat with the use of the exhaust gas heat recovery unit, in the case of cold starting of the engine.

In addition, most part of the predetermined amount of heat received from the exhaust gas is covered by the heat received by the fins on the outer periphery of the heater portion due to the small pitch of the fins. Further, an increase in exhaust gas flow resistance due to the above-described small pitch is offset by setting the pitch of the fins on the outer periphery of the evaporator portion to a large pitch. As a result, it is possible to suppress an increase in back pressure, which is caused on the downstream side in the exhaust gas flow direction due to provision of the exhaust gas heat recovery unit.

In the exhaust gas heat recovery unit according to the first aspect of the invention, the working fluid may flow in the heat pipe.

In the exhaust gas heat recovery unit according to the first aspect of the invention, the pitch of the fins on the outer periphery of the heater portion of the heat pipe may be set in such a manner that an amount $Q_{ex}$ of heat that is received from the exhaust gas within a predetermined period from cold starting of the engine is larger than an amount $Q_k$ of heat that is required to increase the temperature of the working fluid in the heater portion of the heat pipe, which is exposed to an ambient temperature of equal to or lower than the freezing temperature of the working fluid at cold starting time of the engine, to a temperature equal to or higher than the freezing temperature ($Q_{ex} > Q_k$).

With this structure, the pitch of the fins on the outer periphery of the heater portion of the heat pipe is set in such a manner that the temperature of the working fluid, which is exposed to an ambient temperature of equal to or lower than the freezing temperature of the working fluid at cold starting time of the engine, is increased to a temperature equal to or higher than the freezing temperature by the amount $Q_{ex}$ of heat that is received from the exhaust gas within the predetermined period from cold starting of the engine. Therefore, in the case where the exhaust gas heat recovery unit is exposed to an ambient temperature of equal to or lower than the freezing temperature of the working fluid, for example, in the case of cold starting of the engine, a sufficient amount of heat of the exhaust gas is applied to the heater portion that stores the working fluid, and the working fluid in the heating portion is promptly heated by the sufficient amount of heat received from the exhaust gas. As a result, it is possible to smoothly circulate the working fluid to efficiently recover the heat with the use of the exhaust gas heat recovery unit in the case of cold starting of the engine.

The exhaust gas heat recovery unit the first aspect of the invention may further include a condenser that is provided outside the exhaust pipe, and that condenses the working fluid, which has been evaporated at the evaporator portion of the heat pipe, by conducting heat exchange with an externally supplied heat transfer fluid, and a fluid passage which is formed outside the exhaust pipe, which extends near the heater portion, and through which the working fluid condensed by the condenser is discharged from the condenser. The pitch of the fins on the outer periphery of the heater portion of the heat pipe may be set in such a manner that an amount $Q_{ex}$ of heat that is received from the exhaust gas within a predetermined period from cold starting of the engine is larger than the sum of an amount $Q_p$ of heat that is required to increase the temperature of the working fluid in the fluid passage, which is exposed to an ambient temperature of equal to or lower than the freezing temperature of the working fluid at cold starting time of the engine, to a temperature equal to or higher than the freezing temperature and an amount $Q_k$ of heat that is required to increase the temperature of the working fluid in the heater portion of the heat pipe, which is exposed to an ambient temperature of equal to or lower than the freezing temperature of the working fluid at cold starting time of the engine, to a temperature equal to or higher than the freezing temperature ($Q_{ex} > Q_k + Q_p$).

The pitch of the fins on the outer periphery of the heater portion of the heat pipe is set in such a manner that the temperature of the working fluid, which is exposed to an ambient temperature of equal to or lower than the freezing temperature of the working fluid at cold starting time of the engine, is increased to a temperature equal to or higher than the freezing temperature by the amount $Q_{ex}$ of heat that is received from the exhaust gas within the predetermined period from cold starting of the engine. Therefore, in the case where the exhaust gas heat recovery unit is exposed to an ambient temperature of equal to or lower than the freezing temperature of the working fluid, in the case of cold starting of the engine, a sufficient amount of heat of the exhaust gas is applied to the heater portion that stores the working fluid, and the heat of the exhaust gas applied to the heater portion is sufficiently transferred to the working fluid in the fluid passage. Thus, the working fluid in the heating portion and the working fluid in the fluid passage are promptly heated by the sufficient amount of heat received from the exhaust gas. As a result, it is possible to smoothly circulate the working fluid to efficiently recover the heat with the use of the exhaust gas heat recovery unit in the case of cold starting of the engine.

In the exhaust gas heat recovery unit according to the first aspect of the invention, the pitch of the fins on the outer periphery of the evaporator portion of the heat pipe may be set to a pitch large enough to offset an increase in exhaust gas flow resistance, which is caused due to the small pitch of the fins on the outer periphery of the heater portion of the heat pipe.

With this structure, an increase in the exhaust gas flow resistance, which is caused due to the small pitch of the fins on the outer periphery of the heater portion, is offset by setting the pitch of the fins on the outer periphery of the evaporator to a large pitch. Therefore, it is possible to efficiently suppress an increase in back pressure, which is caused on the downstream side in the exhaust gas flow direction due to provision of the exhaust gas heat recovery unit.

In the exhaust gas heat recovery unit according to the first aspect of the invention, the pitch of the fins on the outer periphery of the heater portion of the heat pipe may be substantially half the pitch of the fins on the outer periphery of the evaporator portion of the heat pipe.

In the exhaust gas heat recovery unit according to the first aspect of the invention, the length of the predetermined period may be from 100 seconds to 200 seconds, or 135 seconds.

In the exhaust gas heat recovery unit according to the first aspect of the invention, the fluid level of the working fluid in the vertical direction at engine starting time may be the boundary between the heater portion and the evaporator portion.

In the exhaust gas heat recovery unit according to the first aspect of the invention, the working fluid may be pure water.

In the exhaust gas heat recovery unit according to the first aspect of the invention, the fluid passage may extend near the heater portion while spirally curving, or may extend linearly near the heater portion.

A second aspect of the invention relates to a method for recovering exhaust gas heat using a heat pipe which is provided in an exhaust pipe through which exhaust gas discharged from an engine flows, on the outer periphery of which fins are provided, and in which working fluid flows. According to the method, the pitch of the fins on the outer periphery of a lower portion of the heat pipe is set to a pitch smaller than the pitch of the fins on the outer periphery of an upper portion of the heat pipe.

BRIEF DESCRIPTION OF THE DRAWINGS

The foregoing and further features and advantages of the invention will become apparent from the following description of an example embodiment with reference to the accompanying drawings wherein the same or corresponding portions will be denoted by the same reference numerals and wherein:

FIG 1 is a perspective view showing the state in which an exhaust gas heat exchange unit according to an embodiment of the invention is applied to an exhaust pipe of an automobile;
FIG 2 is a top plan view of the exhaust gas heat recovery unit according to the embodiment of the invention, which is applied to the exhaust pipe of the automobile;
FIG 3 is a cross-sectional view showing the exhaust gas heat recovery unit taken along the line III-III in FIG 6;
FIG 4 is a cross-sectional view showing the exhaust gas heat recovery unit taken along the line IV-IV in FIG 2;
FIG 5 is a cross-sectional view showing the exhaust gas heat recovery unit taken along the line V-V in FIG. 3;
FIG 6 is a cross-sectional view showing the exhaust gas heat recovery unit taken along the line VI-VI in FIG. 3;
FIG 7 is a graph showing the characteristics of a vehicle speed with respect to time in a fuel efficiency measurement mode according to specifications for the U.S.;
FIG 8 is a graph showing the characteristics of a morphological coefficient between finite rectangular faces that are in parallel with each other according to a modification of the embodiment of the invention; and
FIG 9 is a perspective view of a model in which the finite rectangular faces, used in FIG 8, face each other.

DETAILED DESCRIPTION OF THE EMBODIMENT

Hereinafter, an example embodiment of the invention will be described with reference to the accompanying drawings.

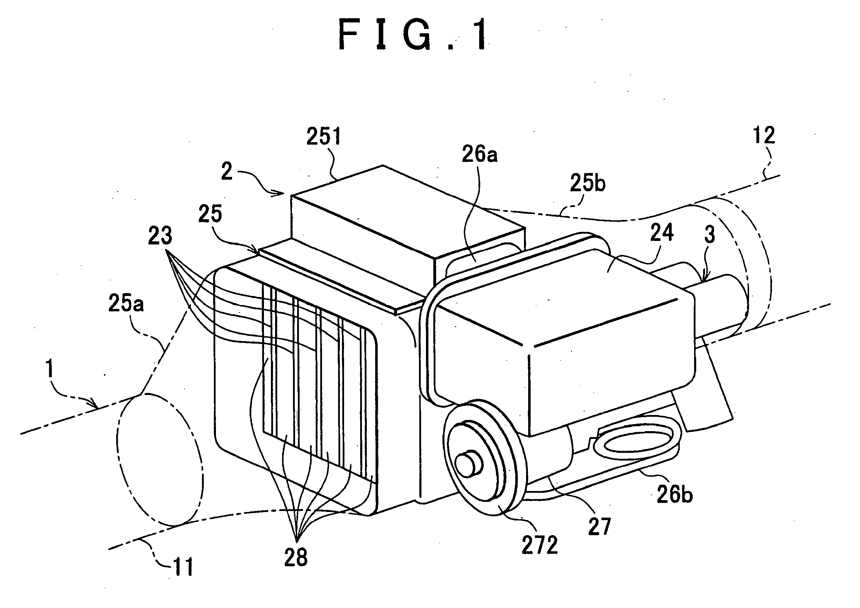

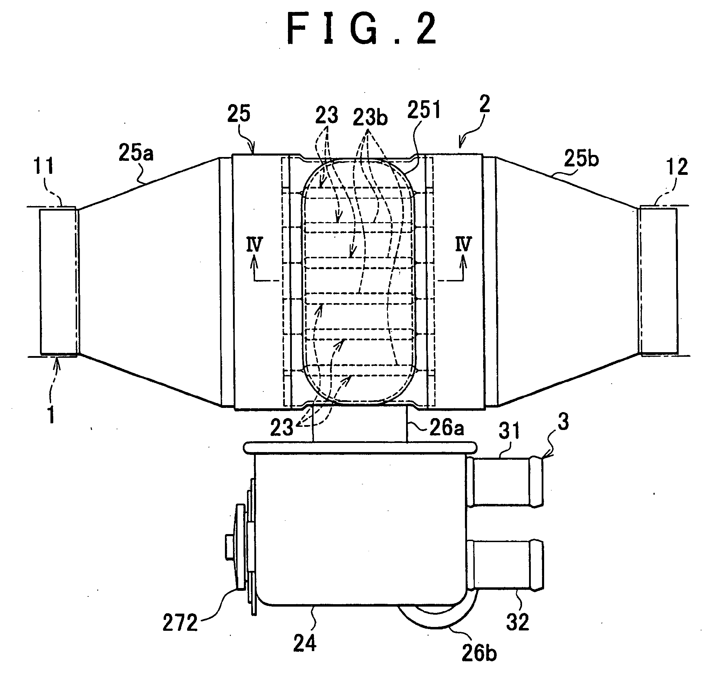

FIG 1 and FIG 2 show an exhaust pipe 1 of an automobile that is provided with an exhaust gas heat recovery unit 2 according to an example embodiment of the invention. The exhaust gas heat recovery unit 2 is provided midway in the exhaust pipe 1. More specifically, the exhaust pipe 1 is partitioned into an upstream-side exhaust pipe conduit 11 and a downstream-side exhaust pipe conduit 12 by the exhaust gas heat recovery unit 2. An upstream-side connector 25a, which is fitted to an evaporation-side case 25 (described later in detail) of the exhaust gas heat recovery unit 2 at a portion on the upstream side in the exhaust gas flow direction, is connected to the upstream-side exhaust pipe conduit 11. A downstream-side connector 25b, which is fitted to the evaporation-side case 25 at a portion on the downstream side in the exhaust gas flow direction, is connected to the downstream-side exhaust pipe conduit 12. A catalytic converter is provided on the upstream side in the upstream-side exhaust pipe conduit 11 (at a position upstream of the exhaust gas heat recovery unit 2). A muffler is provided on the downstream side in the downstream-side exhaust pipe conduit 12 (at a position downstream of the exhaust gas heat recovery unit 2).

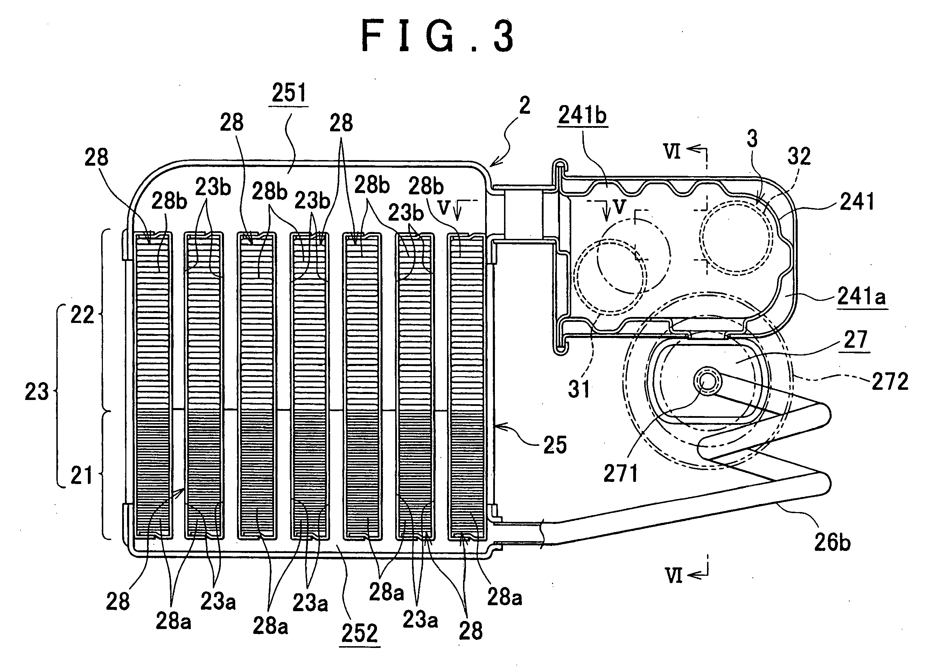

As shown in FIG 3, the exhaust gas heat recovery unit 2 includes six heat pipes 23 which include a heater 21 and an evaporator 22, and a condenser 24.

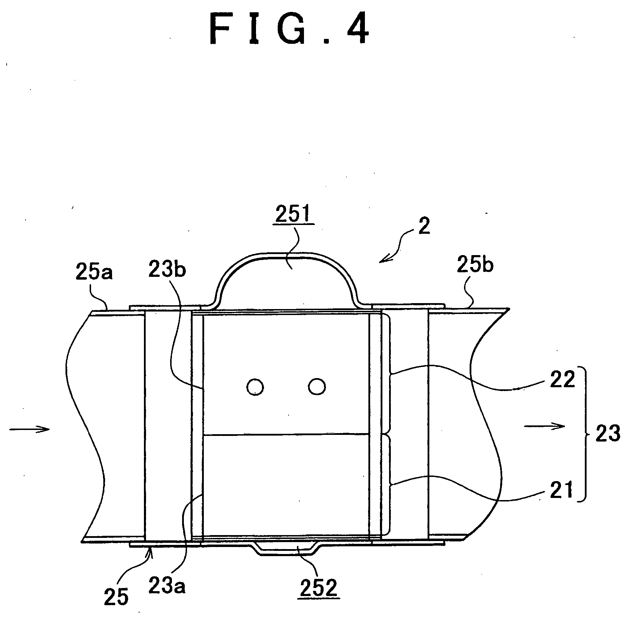

Pure water, which is an example of working fluid, is allowed to flow in each heat pipe 23, and the heat pipes 23 are disposed in the evaporation-side case 25 that has a substantially rectangular frame shape. The evaporation-side case 25 is arranged in such a manner that a center portion in which the heat pipes 23 are disposed faces the inside of the exhaust pipe 1. Each heat pipe 23 has a heater-side heat pipe portion 23a that is located on the heater 21 side (lower side in FIG 3) and that heats the pure water using the heat of exhaust gas, and an evaporator-side heat pipe portion 23b that is located on the evaporator 22 side (upper side in FIG 3) and that evaporates the pure water heated at the heater-side heat pipe portion 23a. In each heat pipe 23, heat exchange is conducted between the pure water flowing in the heater-side heat pipe portion 23a and the evaporator-side heat pipe portion 23b and the exhaust gas discharged from the engine into the exhaust pipe 1. In this way, the pure water is heated and then evaporated. As shown in FIG 4, the heater-side heat pipe portion 23a and the evaporator-side heat pipe portion 23b each has a predetermined length (e.g., approximately 60 millimeters (mm)) in the direction in which the exhaust gas flows in the exhaust pipe 1. The fluid level of the pure water in the vertical direction at the time of engine starting is used as the boundary between the heater-side heat pipe portion 23a and the evaporator-side heat pipe portion 23b. The same applies to the heater 21 and the evaporator 22.

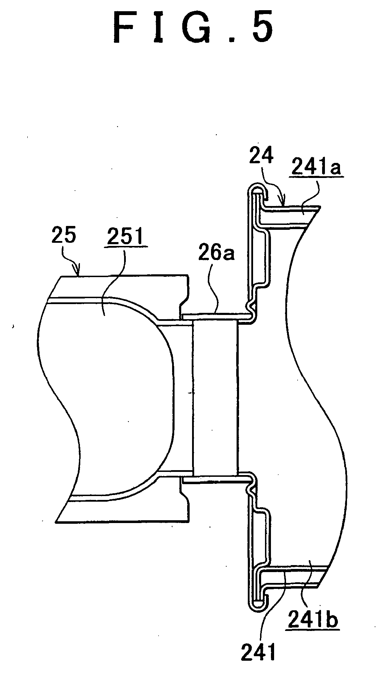

The condenser 24 has a shape of a sealed tank, and is disposed outside the exhaust pipe 1. An inlet 31 and an outlet 32 of a coolant passage 3, through which coolant for an automobile engine is circulated, are connected to the condenser 24. Further, as shown in FIG. 5, the condenser 24 and the evaporation-side case 25 are connected to each other via an upper communication passage 26a and a lower communication passage 26b. With this structure, the pure water in the vapor phase (i.e., water vapor), which is generated through evaporation at the heat pipes 23, which include the heater-side heat pipe portions 23a and the evaporator-side heat pipe portions 23b, in the evaporation-side case 25, is introduced into the condenser 24 through the upper communication passage 26a. A vapor layer 251, in which the water vapors generated through evaporation at the heat pipes 23 join together, is provided at an upper end portion of the evaporation-side case 25. Upper ends of the evaporator-side heat pipe portions 23b of the heat pipes 23 are fitted into the bottom face of the vapor layer 251. An inlet portion 252, into which the pure water in the liquid phase is introduced from a reservoir 27 (described later in detail), is provided at a lower end portion of the evaporation-side case 25. Lower ends of the heater-side heat pipe portions 23a of the heat pipes 23 are fitted into the top face of the inlet portion 252. The upper communication passage 26a extends between the vapor layer 251 of the evaporation-side case 25 and the condenser 24. The lower communication passage 26b, which serves as a fluid passage, is connected at one end (upper end) to the inlet portion 252 of the evaporation-side case 25, extends downward while spirally curving near the heater 21, and is connected at the other end (lower end) to the reservoir 27 (described later in detail). In this case, the diameter of the heater-side heat pipe portion 23a and the diameter of the evaporator-side heat pipe portion 23b are equal to each other.

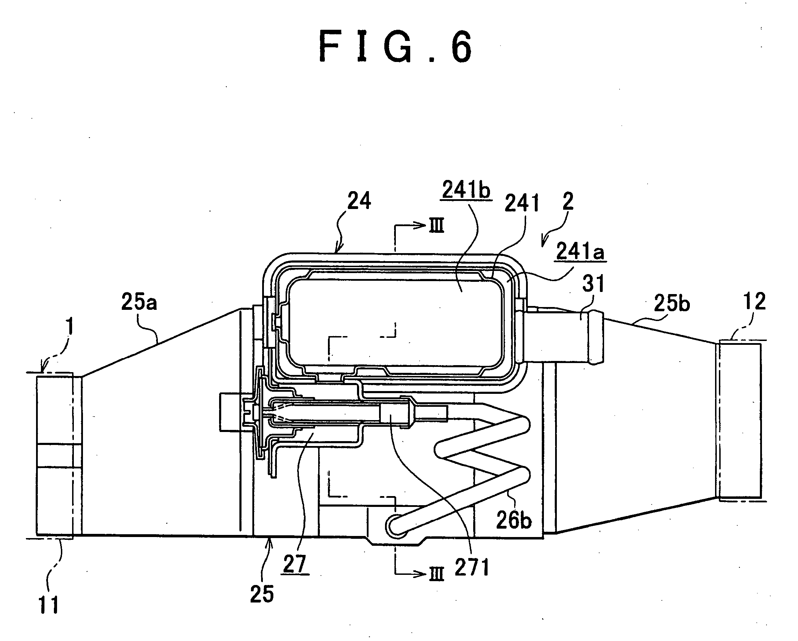

As shown in FIG 6, the condenser 24 has a two-layer structure, that is, the condenser 24 is partitioned into two layers by a partition wall 241. In the condenser 24, heat exchange is conducted between the engine coolant that is introduced through the inlet 31 of the coolant passage 3 into an outer layer 241a that is on the outer side of the partition wall 241 and the water vapor that is introduced from the vapor layer 251 into an inner layer 241b that is on the inner side of the partition wall 241. Thus, the heat of the water vapor is drawn through heat exchange with the engine coolant, and the water vapor in the vapor phase condenses into the pure water in the liquid phase. The engine coolant that has undergone heat exchange with the water vapor at the condenser 24 is discharged from the outer layer 241a of the condenser 24 through the outlet 32 of the coolant passage 3. The inlet 31 of the coolant passage 3 is located at a position on the vapor layer 251 side and on the side of the outer layer 241a of the condenser 24. With this structure, the heat of the high-temperature water vapor that is just introduced from the vapor layer 251 is applied to the engine coolant that is introduced through the inlet 31.

The reservoir 27 is provided at the bottom face of the condenser 24, and the pure water, which is brought into the liquid phase through heat exchange with the engine coolant at the condenser 24, is introduced from the condenser 24 into the reservoir 27 and stored in the reservoir 27. The pure water in the liquid phase stored in the reservoir 27 is returned to the evaporation-side case 25 through the lower communication passage 26b. A valve 271, which restricts back-flow of the pure water in the liquid phase toward the reservoir 27 provided at the bottom face of the evaporation-side case 25, is provided on the reservoir 27 at a portion at which the reservoir 27 is connected to the lower communication passage 26b. The valve 271 is opened and closed by an actuator 272 that is driven by a negative pressure supplied from the engine side. The valve 271 is closed by the actuator 272, for example, when warming-up of the engine has been competed, that is, when heat exchange between the water vapor and the engine coolant at the condenser 24 is no longer required. Thus, movement of the pure water (water vapor) is restricted to reduce a heat load placed on a radiator. The pure water, which is used as a working fluid for the exhaust gas heat recovery unit 2, is sealed in the exhaust gas heat recovery unit 2 in a condition in which the heat pipes 23 (the heater-side heat pipe portions 23a and the evaporator-side heat pipe portions 23b), the condenser 24, the reservoir 27, the upper communication passage 26a, and the lower communication passage 26b have been evacuated (or the pressures in these components have been reduced). The heat pipes 23, the condenser 24, the reservoir 27, and a pipe that defines the upper communication passage 26a and a pipe that defines the lower communication passage 26b are made of stainless material that has high corrosion resistance.

As shown in FIG 3, corrugated-fins 28, which serve as fins that receive the heat of exhaust gas, are fitted to the outer peripheries of the heat pipes 23, that is, the corrugated fins 28 are disposed between the evaporation-side case 25 and the heater-side heat pipe portions 23a and the evaporator-side heat pipe portions 23b that are adjacent the evaporation-side case 25, between the heater-side heat pipe portions 23a that are adjacent to each other, and between the evaporator-side heat pipe portions 23b that are adjacent to each other. The presence of corrugated fins 28 increases the heat transfer areas of the heater-side heat pipe portions 23a and the evaporator-side heat pipe portions 23b, thereby promoting heat exchange between the pure water and the exhaust gas. Also, the corrugated fins 28 are grouped into heater-side corrugated fins 28a and evaporator-side corrugated fins 28b. The heater-side corrugated fins 28a are fitted to the outer peripheries of the heater-side heat pipe portions 23a, that is, the heater-side corrugated fins 28a are disposed between the evaporation-side case 25 and the heater-side heat pipe portions 23a adjacent the evaporation-side case 25 and between the heater-side heat pipe portion 23a that are adjacent to each other. The evaporator-side corrugated fins 28b are fitted to the outer peripheries of the evaporator-side heat pipe portions 23b, that is, the evaporator-side corrugated fins 28b are disposed between the evaporation-side case 25 and the evaporator-side heat pipe portions 23b adjacent to the evaporation-side case 25 and between the evaporator-side heat pipe portions 23b that are adjacent each other.

The fin pitch of the heater-side corrugated fins 28a is smaller than the fin pitch of the evaporator-side corrugated fins 28b. In this case, most part of a predetermined amount of heat that is transferred from the exhaust gas and received by the corrugated fins 28 is covered by the heat received by the heater-side corrugated fins 28a due to the small fin pitch of the heater-side corrugated fins 28a fitted to the outer peripheries of the heater-side heat pipe portions 23a.

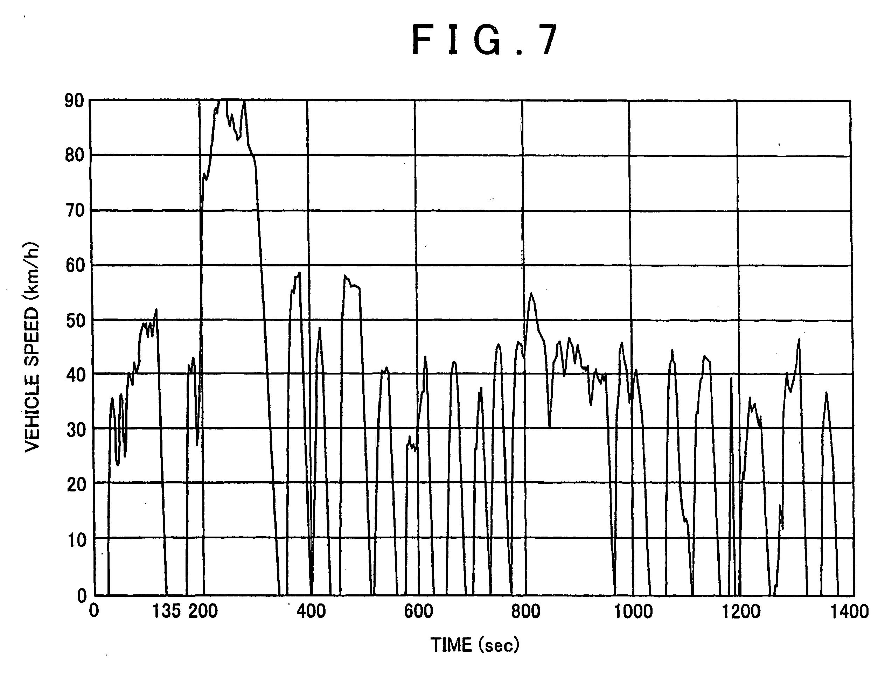

The fin pitch of the heater-side corrugated fins 28a needs to be set in such a manner that an amount $Qex$ of heat that is received from the exhaust gas within a predetermined period from cold starting of the engine is larger than the sum of an amount $Qp$ of heat that is required to increase the temperature of the pure water, which is exposed to an ambient temperature of equal to or lower than the freezing temperature and is frozen within the lower communication passage 26b at the time of cold starting of the engine, to a temperature equal to or higher than the freezing temperature, and an amount $Qk$ of heat that is required to increase the temperature of the pure water, which is exposed to an ambient temperature of equal to or lower than the freezing temperature and is frozen within the heater-side heat pipe portions 23a at the time of cold starting of the engine, to a temperature equal to or higher than the freezing temperature ($Qex > Qk + Qp$). The amount $Qex$ of heat received from the exhaust gas within the predetermined period from cold starting of the engine signifies the amount of heat received from the exhaust gas within a level ground travel period of 135 seconds (predetermined period) after cold starting of the engine. 135 seconds is selected based on the fact that, in a fuel efficiency measurement mode according to specifications for the U.S., the level ground travel period, which starts at the time of cold starting of the engine, in which the vehicle travels on a level ground after idling of the engine, and which ends when the vehicle is stopped, is 135 seconds, as shown in FIG 7. The fin pitch of the evaporator-side corrugated fins 28b is determined based on the surface area of the evaporator-side corrugated fins 28b and the amount of pure water that flows in the heater-side heat pipe. portions 23a. Accordingly, the fin pitch of the heater-side corrugated fins 28a is set to be substantially half the fin pitch of the evaporator-side corrugated fins 28b. The exhaust gas flow resistance increases due to the small fin pitch of the heater-side corrugated fins 28a on the outer peripheries of the heater-side heat pipe portions 23a. Therefore, the fin pitch of the evaporator-side corrugated fins 28b on the outer peripheries of the evaporator-side heat pipe portions 23b is set to a large pitch (substantially twice as large as the fin pitch of the heater-side corrugated fins 28a) in order to offset an increase in the exhaust gas flow resistance due to the small fin pitch of the heater-side corrugated fins 28a.

According to the embodiment of the invention, the fin pitch of the heater-side corrugated fins 28a that are fitted to the outer peripheries of the heater-side heat pipe portions 23a (the fin pitch of the heater-side corrugated fins 28a that are disposed between the evaporation-side case 25 and the heater-side heat pipe portions 23a and between the heater-side heat pipe portions 23a) is set to be smaller than the fin pitch of the evaporator-side corrugated fins 28b that are fitted to the outer peripheries of the evaporator-side heat pipe portions 23b (the fin pitch of the evaporator-side corrugated fins 28b that are disposed between the evaporation-side case 25 and the evaporator-side heat pipe portions 23b and between the evaporator-side heat pipe portions 23b). The fin pitch of the heater-side corrugated fins 28a is set in such a manner that the amount $Qex$ of heat that is received from the exhaust gas within the period of 135 seconds after cold starting of the engine is larger than the sum of the amount $Qp$ of heat that is required to increase the temperature of the pure water, which is exposed to an ambient temperature of equal to or lower than the freezing temperature and is frozen within the lower communication passage 26b at the time of cold starting of the engine, to a temperature equal to or higher than the freezing temperature, and the amount $Qk$ of heat that is required to increase the temperature of the pure water, which is exposed to an ambient temperature of equal to or lower than the freezing temperature and is frozen within the heater-side heat pipe portions 23a at the time of cold starting of the engine, to a temperature equal to or higher than the freezing temperature (Qex > Qk + Qp). Therefore, the fin pitch of the heater-side corrugated fins 28a is set to be substantially half the fin pitch of the evaporator-side corrugated fins 28b. In this way, the amount of heat that the heater-side corrugated fins 28a receive from the exhaust gas is larger than the amount of heat that the evaporator-side corrugated fins 28b receive from the exhaust gas. As a result, in the case where the exhaust gas heat recovery unit 2 is exposed to an ambient temperature of equal to or lower than the freezing temperature, for example, in the case of cold starting of the engine, a sufficient amount of heat of exhaust gas is applied to the heater-side heat pipe portions 23a in which the pure water is stored, and the heat of exhaust gas that is applied to the heater-side heat pipe portions 23a is sufficiently transferred to the lower communication passage 26b. Accordingly, the pure water in the heater-side heat pipe portions 23a and the pure water in the lower communication passage 26b are promptly heated by the sufficient amount of heat of exhaust gas. As a result, it is possible to smoothly circulate the pure water to efficiently recover the heat with the use of the exhaust gas heat recovery unit 2, for example, in the case of cold starting of the engine.

Further, most part of the predetermined amount of heat that is transferred from the exhaust gas and received by the corrugated fins 28 is covered by the heat received by the heater-side corrugated fins 28a due to the small fin pitch of the heater-side corrugated fins 28a on the outer peripheries of the heater-side heat pipe portions 23a. Therefore, the fin pitch of the evaporator-side corrugated fins 28b on the outer peripheries of the evaporator-side heat pipe portions 23b is set to a large pitch in order to offset an increase in the exhaust gas flow resistance due to the small fin pitch of the heater-side corrugated fins 28a. Accordingly, it is possible to suppress an increase in the back pressure on the downstream-side in the exhaust gas flow direction, which is caused due to provision of the exhaust gas heat recovery unit 2.

While the invention has been described with reference to the example embodiment thereof, it is to be understood that the invention is not limited to the example embodiment. To the contrary, the invention is intended to cover various modifications and equivalent arrangements. For example, in the embodiment of the invention described above, the lower communication passage 26b extends between the inlet portion 252 of the evaporation-side case 25 and the reservoir 27 while spirally curving.

Alternatively, the lower communication passage 26b may extend linearly in the up-and-down direction near a lower portion of the evaporation-side case 25 (on the heater 21 side) so that the lower communication passage 26b is more easily exposed to the heat radiated from the heater-side heat pipe portions 23a.

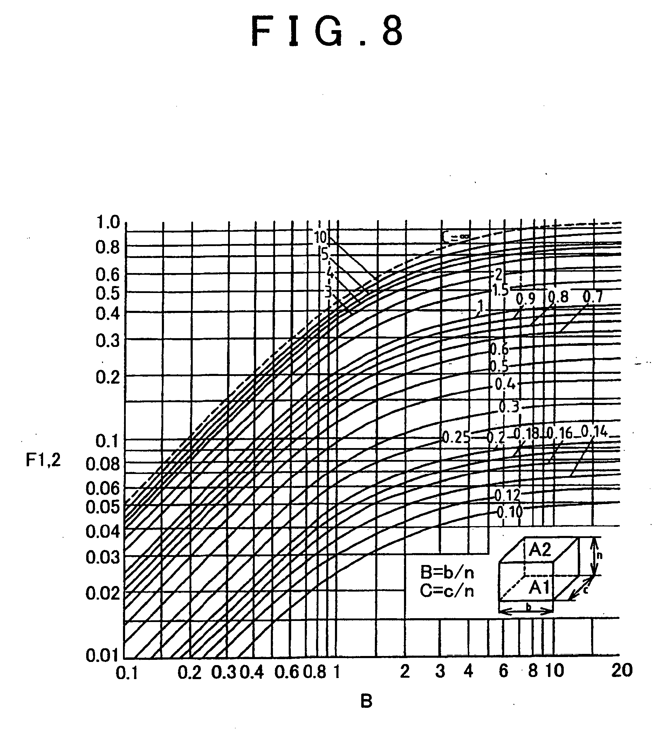

More specifically, the amount of radiant heat between two faces A1 and A2 is derived by the following equation (Equation 1) of radiation between the two faces A1 and A2 and a geometric factor (geometric factor between finite rectangular faces that are in parallel with each other) shown in FIG. 8.

$$Q = F2, 1 \times 5.67 \left[ (T1 / 100)^4 - (T2 / 100)^4 \right] A2$$

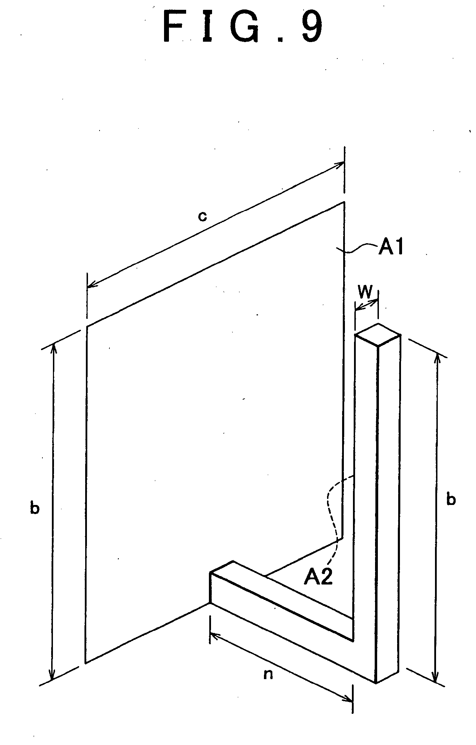

Here, F2, 1 is a geometric factor when the face A2 is seen from the face A1. First, as shown in FIG. 9, a model is prepared in which the face A1, which has a height b (= 50 mm) and a width c (= 50 mm), and the face A2, which has a height b and a width w (= 6 mm), face each other with a distance n (= 50 mm) kept therebetween. The specific heat of water is 4.2 J / gk, the specific heat of ice is 2.1 J / gk, and the specific heat of stainless is 0.44 J / gk. Therefore, when the amount of pure water within a stainless pipe having the face A2 is 2cc, and the mass of the pipe is 20 g, 65 joules (J) of heat is required to increase the temperature of the pure water (ice) frozen within the pipe from the freezing temperature (- 5°C) to 0°C that is higher than the freezing temperature in order to unfreeze the pure water (ice). More specifically, 21 joules (2 x 2.1 x 5 = 21 J) and 44 joules (20 x 0.44 x 5 = 44 J) are required to increase the temperature of the pure water (ice) and the temperature of the stainless pipe, respectively, in order to unfreeze the pure water (ice) within the pipe. In this case, the radiant heat amount between the two faces A1 and A2 is derived as follows according to Equation 1.

$$Q = F2, 1 \times 5.67 \left[ (T1 / 100)^4 - (T2 / 100)^4 \right] A2$$

$$= 0.2 \times 5.67 \left[ (473 / 100)^4 - (268 / 100)^4 \right] \times 3 \times 10^4$$

$$\approx 0.15 \, w$$

Therefore, approximately 15 joules (0.15 x 100 ≈ 15J) is the total amount of heat received from the exhaust gas within an actual level ground travel period of substantially 100 seconds, which is derived by subtracting an idling period from the level ground travel period of 135 seconds after cold starting of the engine. Here, the average of the flow rate of the exhaust gas within the actual level ground travel period (100 seconds) is 10 g / s, and the average of the exhaust gas temperature within the actual level ground travel period is 200°C. When the total heat amount of 65 joules that is required to increase the temperature of the pure water (ice) frozen within the pipe from the freezing temperature of - 5°C to 0°C, which is higher than the freezing temperature, to unfreeze the frozen pure water is divided by the total amount of heat received within the actual level ground travel period, which is 15 joules, a value of approximately 4.3 is derived (65 ÷ 15 ≈ 4.3). Therefore, it is understood that a geometric factor needs to be 4.3 times as large as the geometric factor of the above-described model. Because the height b of the face A2 is 50 mm and the width c of the face A2 is 50 mm, a value B (abscissa axis in FIG. 8) is 1 (B = b / n = 50 / 50 = 1) and a value C (curved line in FIG. 8) is 1 (C = c / n = 50 / 50 = 1). Therefore, based on the intersection of the line indicating the value B of 1 and the curved line indicating the value C of 1, it is understood that the geometric factor of the above-described model is 0.2. Accordingly, a geometric factor of 0.86 is derived by multiplying the geometric factor of the above-described model, which is 0.2, by 4.3 (02. x 4.3 = 0.86). As shown in FIG 8, the curved line that intersects with the line indicating a geometric factor F1, 2 (ordinate axis) of 0.86 is only a curved line indicating a value of 10 (C = 10) (except C = ∞). Because the value B is approximately 10 (B = C ≈ 10), a value of 5 is derived as the distance n (n = 50 / B = 50 / 10 = 5) according to the equation, B = 50 / n. Therefore, the lower communication passage may be formed near the lower portion (heater-side portion) of the evaporation-side case, that is, formed with a distance of 5 millimeters (mm) kept from the lower portion of the evaporation-side case, in such a manner that the lower communication passage extends linearly in the up-and-down direction. With this structure, it is possible to sufficiently unfreeze the pure water frozen within the lower communication passage with the use of the radiant heat from the lower portion of the evaporation-side case, which is received within the actual level ground travel period of 100 seconds after cold starting of the engine.

In the embodiment of the invention described above, based on the fuel efficiency measurement mode according to the specifications for the U.S., the amount Qex of heat, which is received from the exhaust gas within the level ground travel period of 135 seconds after cold starting of the engine, is used to set the fin pitch of the heater-side corrugated fins 28a. However, the amount of heat that is received from the exhaust gas in the case of cold starting of the engine is not limited to the amount of heat that is received from the exhaust gas within the level ground travel period of 135 seconds after cold starting of the engine. For example, the amount of heat that is received from the exhaust gas within a period of 100 seconds after cold starting of the engine or within a period of 200 seconds after cold starting of the engine may be used as the amount of heat that is received from the exhaust gas in the case of cold starting of the engine.

In the embodiment of the invention described above, the fin pitch of the heater-side corrugated fins 28a is set to be substantially half the fin pitch of the evaporator-side corrugated fins 28b so that the amount Qex of heat that is received from the exhaust gas within the predetermined period of 135 seconds after cold starting of the engine is larger than the sum of the amount Qp of heat that is required to increase the temperature of the pure water, which is frozen within the lower communication passage 26b at the time of cold starting of the engine, to a temperature equal to or higher than the freezing temperature, and the amount Qk of heat that is required to increase the temperature of the pure water, which is frozen within the heater-side heat pipe portions 23a at the time of cold starting of the engine, to a temperature equal to or higher than the freezing temperature (Qex > Qk + Qp). Alternatively, the fin pitch of the heater-side corrugated fins may be set to be smaller than the fin pitch of the evaporator-side corrugated fins in such a manner that the amount Qex of heat that is received from the exhaust gas within the predetermined period of 135 seconds after cold starting of the engine is larger than the amount Qk of heat that is required to increase the temperature of the pure water, which is frozen within the heater-side heat pipe portions 23a at the time of cold starting of the engine, to a temperature equal to or higher than the freezing temperature (Qex > Qk). That is, the fin pitch of the heater-side corrugated fins may be set to be larger than the fin pitch of the heater-side corrugated fins, which is set so that the heat amount Qex is larger than the sum of the heat amount Qk and the heat amount Qp (Qex > Qk + Qp). With this structure, it is possible to suppress an increase in the exhaust gas flow resistance due to the small fin pitch of the heater-side corrugated fins on the outer peripheries of the heater-side heat pipe portions. As a result, it is possible to more efficiently suppress an increase in back pressure that occurs on the downstream side in the exhaust gas flow direction due to presence of the heater-side corrugated fins.

In the embodiment of the invention described above, engine coolant is used as a medium target for heat exchange with the exhaust gas, which is conducted in the exhaust gas heat recovery unit 2. Alternatively, engine oil or transmission oil may be used as a medium target for heat exchange with the exhaust gas.

In the embodiment of the invention described above, pure water is used as a working fluid. Alternatively, working fluids such as water other than pure water, alcohol, and fluoro carbon may be used as a working fluid.

While an embodiment of the invention has been illustrated above, it is to be understood that the invention is not limited to details of the illustrated embodiment, but may be embodied with various changes, modifications or improvements, which may occur to those skilled in the art, without departing from the scope of the invention.

**Claims**

1.  An exhaust gas heat recovery unit comprising:

    a heat pipe (23) that is provided in an exhaust pipe, and that includes a heater portion (23a) which heats a working fluid using heat of exhaust gas discharged from an engine and
    an evaporator portion (23b) which evaporates the working fluid, heated by the heater portion, using the heat of the exhaust gas, wherein
    fins (28a, 28b) that receive a predetermined amount of heat of the exhaust gas are provided on an outer periphery of the heat pipe, **characterized in that**:

    a pitch of the fins (28a) on the outer periphery of the heater portion of the heat pipe is set to a pitch smaller than a pitch of the fins (28b) on the outer periphery of the evaporator portion of the heat pipe.

2.  The exhaust gas heat recovery unit according to claim 1, wherein the working fluid flows in the heat pipe (23).

3.  The exhaust gas heat recovery unit according to claim 1 or 2, wherein the pitch of the fins (28a) on the outer periphery of the heater portion (23a) of the heat pipe (23) is set in such a manner that an amount of heat that is received from the exhaust gas within a predetermined period from cold starting of the engine is larger than an amount of heat that is required to increase a temperature of the working fluid in the heater portion of the heat pipe, which is exposed to an ambient temperature of equal to or lower than a freezing temperature of the working fluid at cold starting time of the engine, to a temperature equal to or higher than the freezing temperature.

4.  The exhaust gas heat recovery unit according to claim 1 or 2, further comprising:

    a condenser (24) that is provided outside the exhaust pipe, and that condenses the working fluid, which has been evaporated at the evaporator portion (23b) of the heat pipe (23), by conducting heat exchange with an externally supplied heat transfer fluid; and
    a fluid passage (26b) which is formed outside the exhaust pipe, which extends near the heater portion, and through which the working fluid condensed by the condenser is discharged from the condenser, wherein
    the pitch of the fins (28a) on the outer periphery of the heater portion (23a) of the heat pipe (23) is set in such a manner that an amount of heat that is received from the exhaust gas within a predetermined period from cold starting of the engine is larger than a sum of an amount of heat that is required to increase a temperature of the working fluid in the fluid passage, which is exposed to an ambient temperature of equal to or lower than a freezing temperature of the working fluid at cold starting time of the engine, to a temperature equal to or higher than the freezing temperature and an amount of heat that is required to increase a temperature of the working fluid in the heater portion of the heat pipe, which is exposed to an ambient temperature of equal to or lower than the freezing temperature of the working fluid at cold starting time of the engine, to a temperature equal to or higher than the freezing temperature.

5.  The exhaust gas heat recovery unit according to claim 3 or 4, wherein a length of the predetermined period is from 100 seconds to 200 seconds.

6.  The exhaust gas heat recovery unit according to claim 3 or 4, wherein a length of the predetermined period is 135 seconds.

7.  The exhaust gas heat recovery unit according to any one of claims 1 to 6, wherein the pitch of the fins (28b) on the outer periphery of the evaporator portion (23b) of the heat pipe (23) is set to a pitch large enough to offset an increase in exhaust gas flow resistance, which is caused due to the small pitch of the fins (28a) on the outer periphery of the heater portion (23a) of the heat pipe (23).

8.  The exhaust gas heat recovery unit according to any one of claims 1 to 7, wherein the pitch of the fins (28a) on the outer periphery of the heater portion (23a) of the heat pipe (23) is substantially half the pitch of the fins (28b) on the the outer periphery of the evaporator portion (23b) of the heat pipe (23).

9.  The exhaust gas heat recovery unit according to any one of claims 1 to 8, wherein a fluid level of the working fluid in a vertical direction at engine starting time is a boundary between the heater portion (23a) and the evaporator portion (23b).

10. The exhaust gas heat recovery unit according to any one of claims 1 to 9, wherein the working fluid is pure water.

11. The exhaust gas heat recovery unit according to claim 4, wherein the fluid passage (26b) extends near the heater portion (23a) while spirally curving.

12. The exhaust gas heat recovery unit according to claim 4, wherein the working fluid passage (26b) linearly extends near the heater portion (23a).

**Patentansprüche**

1. Abgaswärmerückgewinnungseinheit mit
einem Wärmerohr (23), das in einer Abgasleitung vorgesehen ist und das einen Erhitzerabschnitt (23a), der ein Arbeitsmedium erhitzt, indem er die Wärme eines aus einem Motor ausgestoßenen Abgases verwendet, sowie einen Verdampferabschnitt (23b) umfasst, der das durch den Erhitzerabschnitt mittels der Wärme des Abgases erhitzte Arbeitsmedium verdampft, wobei
Rippen (28a, 28b), die eine vorgegebene Wärmemenge des Abgases aufnehmen, an einem Außenumfang des Wärmerohrs vorgesehen sind,
**dadurch gekennzeichnet, dass**
eine Teilung der Rippen (28a) an dem Außenumfang des Erhitzerabschnitts des Wärmerohrs auf eine Teilung festgelegt ist, die kleiner ist als eine Teilung der Rippen (28b) an dem Außenumfang des Verdampferabschnitts des Wärmerohrs.

2. Abgaswärmerückgewinnungseinheit nach Anspruch 1, wobei das Arbeitsmedium in dem Wärmerohr (23) strömt.

3. Abgaswärmerückgewinnungseinheit nach Anspruch 1 oder 2, wobei die Teilung der Rippen (28a) an dem Außenumfang des Erhitzerabschnitts (23a) des Wärmerohrs (23) in einer Weise festgelegt ist, dass eine Wärmemenge, die aus dem Abgas innerhalb einer festgelegten Zeitspanne ab einem Kaltstart des Motors aufgenommen wird, größer ist als eine Wärmemenge, die erforderlich ist, um eine Temperatur des Arbeitsmediums in dem Erhitzerabschnitt des Wärmerohrs zu erhöhen, das einer Umgebungstemperatur ausgesetzt ist, die gleich oder niedriger als ein Gefrierpunkt des Arbeitsmediums zum Kaltstartzeitpunkt des Motors ist, hin zu einer Temperatur, die gleich oder höher als der Gefrierpunkt ist.

4. Abgaswärmerückgewinnungseinheit nach Anspruch 1 oder 2, ferner mit
einem Kondensator (24), der außerhalb der Abgasleitung vorgesehen ist, und der das in dem Verdampferabschnitt (23b) des Wärmerohrs (23) verdampfte Arbeitsmedium kondensiert, indem er einen Wärmeaustausch mit einem von außen zugeführten Wärmeträgermedium durchführt; und
einem sich nahe dem Erhitzerabschnitt erstreckenden Fluidkanal (26b), der außerhalb der Abgasleitung ausgebildet ist, und durch den das durch den Kondensator kondensierte Arbeitsmedium aus dem Kondensator abgeführt wird, wobei
die Teilung der Rippen (28a) an dem Außenumfang des Erhitzerabschnitts (23a) des Wärmerohrs (23) in einer Weise festgelegt ist, dass eine Wärmemenge, die aus dem Abgas innerhalb einer vorgegebenen Zeitspanne ab einem Kaltstart des Motors aufgenommen wird, größer ist als eine Summe aus einer Wärmemenge, die erforderlich ist, um eine Temperatur des Arbeitsmediums in dem Fluidkanal zu erhöhen, das einer Umgebungstemperatur ausgesetzt ist, die gleich oder niedriger als ein Gefrierpunkt des Arbeitsmediums zum Kaltstartzeitpunkt des Motors ist, hin zu einer Temperatur, die gleich oder höher als der Gefrierpunkt ist, sowie einer Wärmemenge, die erforderlich ist, um eine Temperatur des Arbeitsmediums in dem Erhitzerabschnitt des Wärmerohrs zu erhöhen, das einer Umgebungstemperatur ausgesetzt ist, die gleich oder niedriger als ein Gefrierpunkt des Arbeitsmediums zum Kaltstartzeitpunkt des Motors ist, hin zu einer Temperatur, die gleich oder höher als der Gefrierpunkt ist.

5. Abgaswärmerückgewinnungseinheit nach Anspruch 3 oder 4, wobei eine Dauer der vorgegebenen Zeitspanne von 100 Sekunden bis 200 Sekunden beträgt.

6. Abgaswärmerückgewinnungseinheit nach Anspruch 3 oder 4, wobei eine Dauer der vorgegebenen Zeitspanne 135 Sekunden beträgt.

7. Abgaswärmerückgewinnungseinheit nach einem der Ansprüche 1 bis 6, wobei die Teilung der Rippen (28b) an dem Außenumfang des Verdampferabschnitts (23b) des Wärmerohrs (23) auf eine Teilung festgelegt ist, die groß genug ist, um einen Anstieg des Abgasströmungswiderstands auszugleichen, der durch die kleine Teilung der Rippen (28a) an dem Außenumfang des Erhitzerabschnitts (23a) des Wärmerohrs (23) verursacht ist.

8. Abgaswärmerückgewinnungseinheit nach einem der Ansprüche 1 bis 7, wobei die Teilung der Rippen (28a) an dem Außenumfang des Erhitzerabschnitts (23a) des Wärmerohrs (23) im Wesentlichen die Hälfte der Teilung der Rippen (28b) an dem Außenumfang des Verdampferabschnitts (23b) des Wärmerohrs (23) beträgt.

9. Abgaswärmerückgewinnungseinheit nach einem der Ansprüche 1 bis 8, wobei ein Füllstand des Arbeitsmediums in einer senkrechten Richtung zum Motorstartzeitpunkt eine Grenze zwischen dem Erhitzerabschnitt (23a) und dem Verdampferabschnitt (23b) ist.

10. Abgaswärmerückgewinnungseinheit nach einem der Ansprüche 1 bis 9, wobei das Arbeitsmedium destilliertes Wasser ist.

11. Abgaswärmerückgewinnungseinheit nach Anspruch 4, wobei sich der Fluidkanal (26b) nahe dem Erhitzerabschnitt (23a) spiralförmig gekrümmt erstreckt.

12. Abgaswärmerückgewinnungseinheit nach Anspruch 4, wobei sich der Arbeitsfluidkanal (26b) nahe dem Erhitzerabschnitt (23a) geradlinig erstreckt.

## Revendications

1. Unité de récupération de chaleur de gaz d'échappement comprenant :

un caloduc (23) qui est prévu dans un tuyau d'échappement et qui comprend une partie formant dispositif de chauffage (23a) qui chauffe un fluide de travail en utilisant la chaleur du gaz d'échappement déchargé par un moteur et une partie formant évaporateur (23b) qui évapore le fluide de travail, chauffé par la partie formant dispositif de chauffage, en utilisant la chaleur du gaz d'échappement, dans laquelle :

des ailettes (28a, 28b) qui reçoivent une quantité prédéterminée de chaleur du gaz d'échappement sont prévues sur une périphérie externe du caloduc,
**caractérisée en ce que** :

un pas des ailettes (28a) sur la périphérie externe de la partie formant dispositif de chauffage du caloduc est déterminé sur un pas inférieur à un pas des ailettes (28b) sur la périphérie externe de la partie formant évaporateur du caloduc.

2. Unité de récupération de chaleur de gaz d'échappement selon la revendication 1, dans laquelle le fluide de travail s'écoule dans le caloduc (23).

3. Unité de récupération de chaleur de gaz d'échappement selon la revendication 1 ou 2, dans laquelle le pas des ailettes (28a) sur la périphérie externe de la partie formant dispositif de chauffage (23a) du caloduc (23) est déterminé de sorte qu'une quantité de chaleur qui est reçue du gaz d'échappement dans une période prédéterminée à partir du démarrage à froid du moteur est supérieure à une quantité de chaleur qui est nécessaire pour augmenter une température du fluide de travail dans la partie formant dispositif de chauffage du caloduc, qui est exposé à une température ambiante égale ou inférieure à une température de congélation du fluide de travail au moment du démarrage à froid du moteur, jusqu'à une température égale ou supérieure à la température de congélation.

4. Unité de récupération de chaleur de gaz d'échappement selon la revendication 1 ou 2, comprenant en outre :

un condensateur (24) qui est prévu à l'extérieur du tuyau d'échappement et qui condense le fluide de travail, qui a été évaporé au niveau de la partie formant évaporateur (23b) du caloduc (23), en réalisant l'échange thermique avec un fluide de transfert de chaleur alimenté extérieurement ; et
un passage de fluide (26b) qui est formé à l'extérieur du tuyau d'échappement, qui s'étend à proximité de la partie formant dispositif de chauffage, et à travers lequel le fluide de travail condensé par le condensateur est déchargé par le condensateur, dans laquelle :

le pas des ailettes (28a) sur la périphérie externe de la partie formant dispositif de chauffage (23a) du caloduc (23) est déterminé de sorte qu'une quantité de chaleur qui est reçue du gaz d'échappement dans une période prédéterminée à partir du démarrage à froid du moteur est supérieure à une somme d'une quantité de chaleur qui est nécessaire pour augmenter une température du fluide de travail dans le passage de fluide qui est exposé à une température ambiante égale ou inférieure à une température de congélation du fluide de travail au moment du démarrage à froid du moteur jusqu'à une température égale ou supérieure à la température de congélation et une quantité de chaleur qui est nécessaire pour augmenter une température du fluide de travail dans la partie formant dispositif de chauffage du caloduc, qui est exposé à une température ambiante égale ou inférieure à la température de congélation du fluide de travail au moment du démarrage à froid du moteur jusqu'à une température égale ou supérieure à la température de congélation.

5. Unité de récupération de chaleur de gaz d'échappement selon la revendication 3 ou 4, dans laquelle une longueur de la période prédéterminée est de l'ordre de 100 secondes à 200 secondes.

6. Unité de récupération de chaleur de gaz d'échappement selon la revendication 3 ou 4, dans laquelle une longueur de la période prédéterminée est de 135 secondes.

7. Unité de récupération de chaleur de gaz d'échappement selon l'une quelconque des revendications 1 à 6, dans laquelle le pas des ailettes (28b) sur la périphérie externe de la partie formant évaporateur (23b) du caloduc (23) est déterminé sur un pas assez grand pour décaler une augmentation de résistance à l'écoulement des gaz d'échappement, qui est provoquée en raison du petit pas des ailettes (28a) sur la périphérie externe de la partie formant dispositif de chauffage (23a) du caloduc (23).

8. Unité de récupération de chaleur de gaz d'échappement selon l'une quelconque des revendications 1 à 7, dans laquelle le pas des ailettes (28a) sur la périphérie externe de la partie formant dispositif de chauffage (23a) du caloduc (23) représente sensiblement la moitié du pas des ailettes (28b) sur la périphérie externe de la partie formant évaporateur (23b) du caloduc (23).

9. Unité de récupération de chaleur de gaz d'échappement selon l'une quelconque des revendications 1 à 8, dans laquelle un niveau de fluide du fluide de travail dans une direction verticale au moment du démarrage du moteur est une limite entre la partie formant dispositif de chauffage (23a) et la partie formant évaporateur (23b).

10. Unité de récupération de chaleur de gaz d'échappement selon l'une quelconque des revendications 1 à 9, dans laquelle le fluide de travail est de l'eau pure.

11. Unité de récupération de chaleur de gaz d'échappement selon la revendication 4, dans laquelle le passage de fluide (26b) s'étend à proximité de la partie formant dispositif de chauffage (23a) tout en s'incurvant en spirale.

12. Unité de récupération de chaleur de gaz d'échappement selon la revendication 4, dans laquelle le passage de fluide de travail (26b) s'étend de manière linéaire à proximité de la partie formant dispositif de chauffage (23a).

# FIG. 1

EP 2 263 056 B1

# FIG.2

# FIG.3

EP 2 263 056 B1

# F I G . 4

# F I G . 5

# FIG.6

# FIG.7

EP 2 263 056 B1

# F I G . 8

# F I G . 9

## REFERENCES CITED IN THE DESCRIPTION

**Patent documents cited in the description**

- JP 4045393 A
- JP 2006313056 A
- US 20080047690 A